Europäisches Patentamt

European Patent Office

Office européen des brevets

(19)

(11) Publication number: **0 077 195**
A2

# (12) EUROPEAN PATENT APPLICATION

(21) Application number: 82305374.9

(22) Date of filing: 08.10.82

(51) Int. Cl.³: **B 60 K 5/12**, F 16 F 9/08, F 16 F 9/10

(30) Priority: 09.10.81 JP 149465/81 U

(43) Date of publication of application: 20.04.83 Bulletin 83/16

(84) Designated Contracting States: **DE FR IT**

(71) Applicant: **BRIDGESTONE TIRE COMPANY LIMITED, 10-1, Kyobashi 1-Chome Chuo-Ku, Tokyo (JP)**

(72) Inventor: **Dan, Takuya, 1082-1, Kanaicho Totsuka-ku, Yokohama-shi Kanagawa-ken (JP)**
Inventor: **Watanabe, Isao, 150-7, Kashiocho Totsuka-ku, Yokohama-shi Kanagawa-ken (JP)**
Inventor: **Kurata, Tomoyuki, 150-7, Kashiocho Totsuka-ku, Yokohama-shi Kanagawa-ken (JP)**

(74) Representative: **Haggart, John Pawson et al, Page, White & Farrer 27 Chancery Lane, London, WC2A 1NT (GB)**

(54) **Elastomeric shock and vibration isolator.**

(57) An elastomeric shock and vibration isolator has a ring shaped rubber member (6) in which a chamber (100) is formed or a ring shaped rubber member (6) having a sealed gas chamber (A) and two liquid chambers (B, C) filled with liquid which are connected to each other through an orifice (7). A tightening ring (13) in the outer circumference of the rubber member (6) is adjustable to adjust tightening forces exerted on the ring shaped rubber member (6). The characteristics of the isolator can be changed to suit the position and condition of utilization by adjusting the tightening ring.

EP 0 077 195 A2

ELASTOMERIC SHOCK AND VIBRATION ISOLATOR

This invention relates to elastomeric shock and vibration isolators.

Recently, elastomeric shock and vibration isolators having additional damping action by means of liquid and/or gas have come into use as the mounting means for engines or the like.

The characteristics of the elastomeric shock and vibration isolator are required to match for each mode of vibration where the isolator is applied. Namely, it is preferable to get lower vibration transfer rate of the isolator for both low frequency vibration having a large amplitude and high frequency vibration having a small amplitude by means of adding additional damping capacity to the former whereas not adding to the latter.

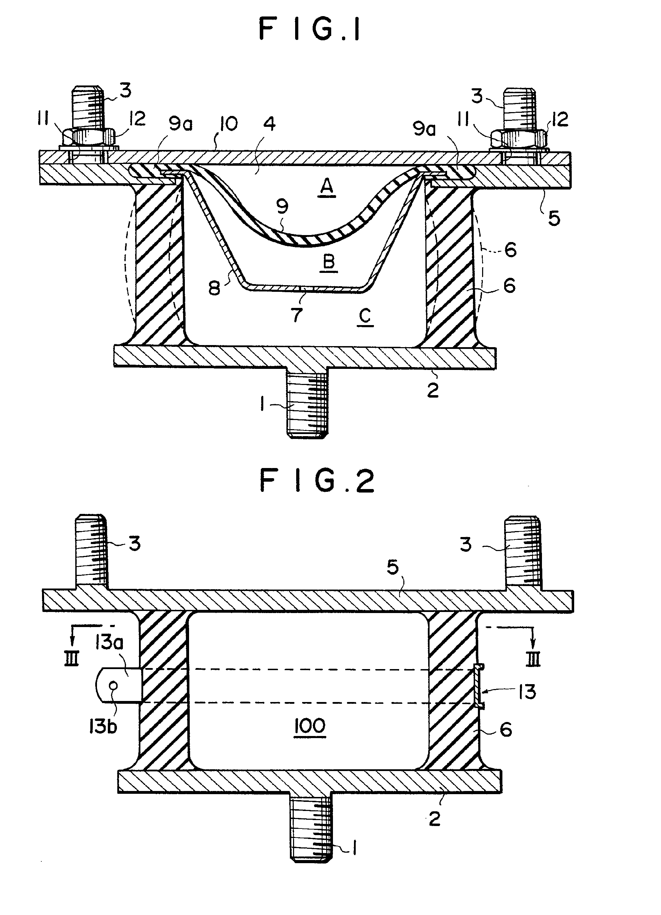

Such isolators may be formed as vulcanized rubber ring shaped members, and one or more metal rings have been applied to the outer circumference of the ring shaped rubber member in order to provide sufficient damping capacity. However, an increasing number of metal rings brings higher dynamic spring constant which is undesirable for interior noise of the vehicle, such as booming noise. Furthermore, no elastomeric shock and vibration isolator which can be properly controlled depending on the position and condition of application has been found among the type of shock and vibration isolator as shown in Figure 1 or the elastomeric shock and vibration isolator having a simple ring shaped rubber member with a chamber inside.

An object of the present invention is to provide an elastomeric shock and vibration isolator having a ring shaped rubber member inside which a chamber is formed and in which a tightening ring which is able to control the tightening force applied against the ring shaped rubber member is fitted on the outer circumference of the ring shaped rubber member.

A further object of this invention is to provide an elastomeric shock and vibration isolator having a sealed gas chamber inside the ring shaped rubber member and two liquid chambers sealing liquid, and connected to each other through an orifice, and in which a tightening ring which is able to control the tightening force applied against the ring shaped rubber member is fitted on the outer circumference of the ring shaped rubber member.

According to the invention there is provided an elastomeric shock and vibration isolator having a ring shaped rubber member in which a chamber is formed, comprising one or more tightening rings fitted to an outer circumference of said ring shaped rubber member characterised in that said isolator further comprises adjusting means for adjusting the tightening force of said tightening ring against said ring shaped rubber member.

The present invention is thus characterised by making it possible to adjust the tightening force of the tightening ring which is used for suppressing the deflection in the radial direction of the ring shaped rubber member in which a chamber is formed, or the ring shaped rubber member which has a sealed gas chamber and two liquid chambers which are filled with liquid and connected to each other so as to cause liquid to pass through an orifice.

Optimum performance can easily be attained in the isolator of the invention by adjusting the amount of deflection of the ring shaped rubber member depending on the position or condition of application of the elastomeric shock and vibration isolator, since one or more tightening rings, which can adjust the tightening force against a ring shaped rubber member, are inserted on an outer circumference of this ring shaped rubber member in which a chamber is formed.

Furthermore, in an embodiment wherein a tightening ring

**0077195**

is inserted on a ring shaped rubber member of an elastomeric shock and vibration isolator in which liquid and gas are sealed, as the tightening force of the tightening ring increases, deflection of the ring shaped rubber member decreases and the amount of liquid passing through the orifice increases; and as tightening force of the tightening ring decreases, a decrease in the dynamic spring constant at a high frequency results. Therefore, effective utilization of additional damping capacity caused by gas and liquid, can be realized according to the position and condition of application of the isolator.

Some embodiments of the invention will now be described, by way of example, with reference to the accompanying drawings in which:-

Figure 1 is a sectional view of a known elastomeric shock and vibration isolator in which liquid and gas are sealed;

Figure 2 is a sectional view showing a first embodiment of an isolator of the invention having a tightening ring;

Figure 3 is a sectional view along the line III-III of Figure 2;

Figure 4 is a sectional view showing a second embodiment of the invention with a tightening ring;

Figure 5 is a diagram showing one embodiment of means for adjusting the tightening force exerted by the tightening ring; and

Figure 6 is a diagram showing one embodiment of means for adjusting the pressure in a gas chamber of the isolator.

Figure 1 shows the principal construction of an elastomeric shock and vibration isolator which is made of rubber. The isolator has additional damping action by liquid and gas. A lower plate 2 on which a mounting bolt 1 is secured, and an upper plate 5 on which assembly bolts 3 are secured and which has an opening 4 through the centre, are positioned in the mold for vulcanizing rubber to form a cylinder of a vulcanized ring shaped rubber member 6 having a diameter approximately the same as the opening 4 in the upper plate 5.

This cylinder is filled with liquid, a divider 8,

-4-     0077195

whose central portion protrudes toward the lower plate 2 and has an orifice 7 mounted on the upper plate 5, and further the central portion of a bowl shaped flexible rubber diaphram 9 is mounted on the upper plate 5 so that the central portion of the diaphram 9 protrudes toward the orifice 7. A lid 10 is arranged on a flange 9a of the flexible rubber diaphram 9 to form an air tight space with the flexible rubber diaphram 9. The lid 10 and the upper plate 5 are fixed to each other. Inside, this isolator is divided into 3 chambers, namely an air chamber A and liquid chambers B and C by the rubber diaphram 9 and the divider 8. The lid 10 is fixed on the upper plate 5 by tightening nuts 12 on the assembly bolts 3 of the upper plate 5 through holes 11 in the lid 10.

This elastomeric shock and vibration isolator can provide desired additional damping capacity by means of liquid passing through the orifice 7. However, an isolator of this structure has the disadvantage of deformation of the ring shaped rubber member 6 in the manner of the dotted line shown in Figure 1 to reduce the liquid passing through the orifice 7, resulting in insufficient additional damping capacity.

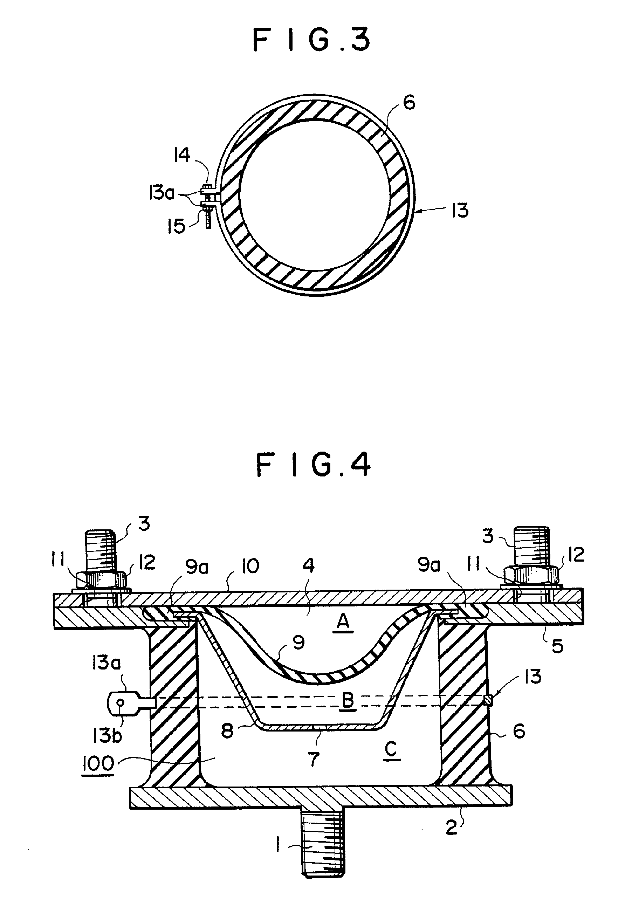

Figure 2 shows a first embodiment of an elastomeric shock and vibration isolator of the invention wherein a lower plate 2 on which a mounting bolt 1 is secured and an upper plate 5 on which assembly bolts 3 are secured, are arranged at a predetermined position in a mold for vulcanizing rubber, and then a ring shaped rubber member 6 is formed between the lower and upper plates 2 and 5 by vulcanizing. Gas is sealed within the chamber 100 surrounded by the upper and lower plates 5 and 2 and the ring shaped rubber member 6. On the outer circumference of the ring shaped rubber member 6, a tightening ring 13, which can exert adjustable tightening force against the ring shaped rubber member 6, is fitted. Both ends of this tightening ring 13 are bent outwardly to face to each other, these bent portions being tightening members 13a and 13a having holes 13b and 13b through which a bolt 14 is inserted as shown in Figure 3, and whereby tightening force can be adjusted by means of tightening a nut 15. In this first embodiment, although only one tightening ring 13 is used, it is possible to use two or more rings and further, two semicircular strips having the tightening members 13a and 13a at both ends may be applied and tightening is carried out at two positions.

Large tightening force exerted by the tightening ring 13 provides large damping capacity at a low frequency vibration, while it is possible to decrease dynamic spring constant at a high frequency vibration, by exerting smaller tightening force.

Figure 4 shows a second embodiment of a elastomeric shock and vibration isolator with sealed liquid. This is similar to the elastomeric shock and vibration isolator in Figure 1, in that a lower plate 2 on which a mounting bolt 1 is secured and an upper plate 5 on which assembly bolts 3 are secured and at the centre of which an opening 4 is bored, are arranged at predetermined positions in a mold for vulcanizing rubber, a ring shaped rubber member 6 is cylindrically formed by means of vulcanizing. The ring shaped rubber member 6 has approximately the same diameter as the opening 4 in the upper plate 5. Other similarities to the elastomeric shock and vibration isolator shown in Figure 1, are a divider 8 having an orifice 7, a flexible rubber diaphram 9, a lid 10, holes 11 and nuts 12, and there are a gas chamber A and liquid chambers B and C inside chamber 100. On the outer circumference of the ring shaped rubber member 6, a tightening ring 13, which can exert adjustable tightening force on the ring shaped rubber member 6 is placed. This tightening ring 13 has the tightening members 13a and 13a and the holes 13b and 13b as in the embodiment of Figures 2 and 3, and adjustmemt of the tightening force is thus achieved by adjusting the distance between the tightening members 13a and 13a. Large tightening force of the tightening ring 13 means smaller deflection of the ring shaped rubber member 6, whereby the amount of liquid passing through the orifice 7 increases. On the contrary, smaller tightening force makes the dynamic spring constant lower at high frequency.

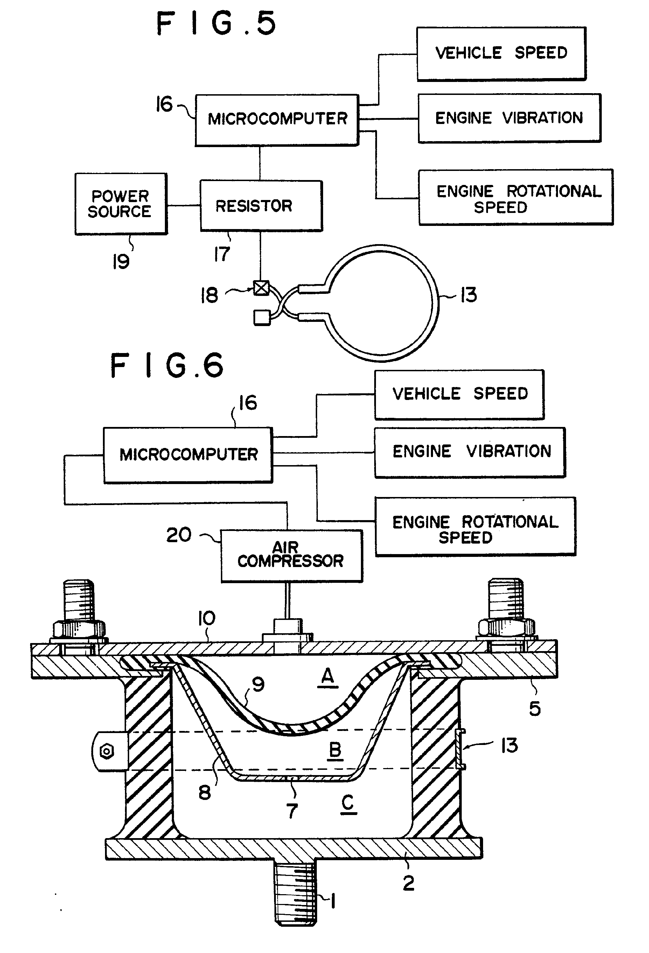

Figure 5 shows one example of means for adjustment of the tightening force of the tightening ring 13 which is applied for the engine mount of an automobile. In this arrangement, data of engine rotational speed, vehicle speed, and engine vibration are fed to a microcomputer 16, which controls a resistor 17 according to the predetermined program which then adjusts the electric current flowing from a power source to an electromagnet 18 on the tightening ring 13, in order to control effective performance against vehicle body vibration such as shake (low frequency vibration) and the like or interior noise of the automobile such as booming noise and the like. The tightening force of the tightening ring 13 varies so that the engine mount produces the best effect, by adjusting the current flowing to the electromagnet 18. In other words, for low frequency, large loss factor is obtainable by increasing bulk modulus with increased tightening force of the tightening ring 13, whereas, for high frequency, small dynamic spring constant is obtainable by decreasing bulk modulus with decreased tightening force of the tightening ring 13. Large bulk modulus (that is value indicating pressure increase per unit volume change) means tendency to pressure increase, whereby in the elastomeric shock and vibration isolator sealing liquid, as shown in the embodiment of Figure 4, large damping capacity can be attained, because of increased flow rate passing through the orifice 7.

Figure 6 illustrates an arrangement which enables one to get proper characteristics of engine mounting. The elastomeric shock and vibration isolator shown in Figure 6 is similar to the embodiment of Figure 4, but is different in that pressure in the gas chamber A, i.e. back pressure, is adapted to be changed by means of compressor 20. The operation of the air compressor 20 is controlled by a microcomputer 16 with input data of engine rotational speed, vehicle speed and engine vibration, as in the embodiment of Figure 5.

The adjustment of pressure may also be applied to the elastomeric shock and vibration isolator described with reference to Figures 2 and 3.

In the embodiments of the invention, it is preferable to use synthetic resin or light metal such as aluminium as the material of the tightening ring 13, rather than iron, even though iron also may be used. Vibration caused by the firing in the engine, has 3 to 6 times of the engine rotational speed and becomes a problem in an engine having six cylinders for example, so damping performance of maximum 500 Hz - 600 Hz is essential. For the elastomeric shock and vibration isolator using a tightening ring 13 made of iron, this tightening ring 13 resonates at a frequency over 100 Hz. The resonant tightening ring 13 has the disadvantage of large transfer rate of vibration due to large dynamic spring constant at around a resonant point. Therefore, the inventors of this invention have found experimentally a method of avoiding the disadvantages caused by an iron tightening ring, by using the light weight tightening rings 13 made of synthetic resin or light metals. Furthermore, the lighter tightening rings 13 shift the resonant frequency point to a higher frequency. Thus, the transfer rate of engine vibration can be restricted to a lower value.

Claims:

1. An elastomeric shock and vibration isolator having a ring shaped rubber member (6) in which a chamber is formed, comprising one or more tightening rings (13) fitted to an outer circumference of said ring shaped rubber member (6), characterised in that said isolator further comprises adjusting means (14, 15, 18) for adjusting the tightening force of said tightening ring (13) against said ring shaped rubber member (6).

2. An elastomeric shock and vibration isolator according to Claim 1, wherein two liquid chambers (B, C) are divided in the space (100) within the ring shaped rubber member (6) by a divider (8) having an orifice (7), the chambers being connected to each other through said orifice, and a sealed gas chamber (A) is adjacent to one of said two liquid chambers and is separated therefrom by a flexible diaphram (9), said two liquid chambers (B, C) being filled with liquid.

3. An elastomeric shock and vibration isolator according to Claim 1 or Claim 2, wherein said tightening ring (13) is made of synthetic resin or light metal including aluminium.

4. An elastomeric shock and vibration isolator according to any one of Claims 1 to 3, wherein the tightening ring (13) is formed corresponding to said ring shaped rubber member (6) and said adjusting means (14, 15 18) are provided to adjust the tightening force of said tightening ring.

5. An elastomeric shock and vibration isolator according to any one of Claims 1 to 3, wherein said tightening ring (13) comprises two semicircular rings corresponding to said ring shaped rubber member (6) and said adjusting means (14, 15, 18) connects both ends of said two semicircular rings to each other to adjust the tightening force of said tightening ring.

6. An elastomeric shock and vibration isolator having a chamber (A) filled with gas, comprising a lower plate (2) on which a mounting bolt (1) is secured, an upper plate (5) on which at least one assembly bolt (3) is secured, a ring shaped rubber member (6) arranged between said lower plate (2) and said upper plate (5), a tightening ring (13) fitted on a circumference of said ring shaped rubber member (6) characterised in that said isolator further comprises adjusting means (14, 15 18) for adjusting tightening force of said tightening ring (13) against said ring shaped rubber member (6).

7. An elastomeric shock and vibration isolator having a chamber therein, comprising a lower plate (2) on which a mounting bolt (1) is secured, an upper plate (5) having an opening (4) through a centre thereof and on which at least one assembly bolt (3) is secured, a ring shaped rubber member (6) arranged between said lower plate (2) and said upper plate (5), a lid (10) provided on said upper plate and forming said chamber together with said lower plate (2), upper plate (5) and ring shaped rubber member (6), a flexible rubber diaphram (9) forming together with said lid a sealed gas chamber (A) in said chamber, a divider (8) dividing two liquid chambers (B, C) in the residual space in said chamber and having an orifice (7) through which said two liquid chambers (B, C) are connected to each other, and a tightening ring (13) fitted on to the circumference of said ring shaped rubber member (6), said two liquid chambers (B, C) being filled with liquid and one (B) of said two liquid chambers being adjacent to said gas chamber (A) and separated therefrom by said flexible rubber diaphram (9), characterised in that said isolator further comprises adjusting means (14, 15, 18) for adjusting the tightening force exerted by said tightening ring (13) on said ring shaped rubber member (6).

8. An elastomeric shock and vibration isolator according to Claim 6 or Claim 7, wherein said tightening ring (13) is made of synthetic resin or light metal including aluminium.

# F I G . I

# F I G . 2

0077195

# F I G. 3

# F I G. 4

# F I G . 5

MICROCOMPUTER — 16

VEHICLE SPEED

ENGINE VIBRATION

ENGINE ROTATIONAL SPEED

POWER SOURCE — 19

RESISTOR — 17

18 — 13

# F I G . 6

MICROCOMPUTER — 16

VEHICLE SPEED

ENGINE VIBRATION

ENGINE ROTATIONAL SPEED

20 — AIR COMPRESSOR

10

9 — A

5

B — 13

8

7 — C

2

1